Europäisches Patentamt

(19) European Patent Office

Office européen des brevets

(11) **EP 0 753 728 A2**

(12) **EUROPEAN PATENT APPLICATION**

(43) Date of publication:
15.01.1997 Bulletin 1997/03

(51) Int. Cl.⁶: **G01L 13/06**

(21) Application number: 96105497.0

(22) Date of filing: 04.04.1996

(84) Designated Contracting States:
**DE GB NL**

(30) Priority: 14.07.1995 JP 178745/95
14.02.1996 JP 26749/96

(71) Applicant: **Yokogawa Electric Corporation**
**Tokyo 180 (JP)**

(72) Inventors:
• **Ikeda, Kyoichi**
**Nagano 399-41 (JP)**

• **Watanabe, Tetsuya**
**Nagano 396 (JP)**
• **Fukuhara, Satoshi**
**Tokyo 205 (JP)**
• **Yoshida, Takashi**
**Nagano 396 (JP)**
• **Tsukamoto, Hideo**
**Saitama 352 (JP)**

(74) Representative: **Henkel, Feiler, Hänzel & Partner**
**Möhlstrasse 37**
**81675 München (DE)**

(54) **Semiconductor differential pressure measuring device**

(57)     This is a semiconductor differential pressure measuring device comprising two measurement diaphragms and two detection sensors provided in a semiconductor substrate using micromachining techniques, and a computing circuit which computes the differences between these two sensor outputs:

for each of the two measurement diaphragms, the measuring pressure transmission communicating hole being provided respectively so that these two measurement diaphragms operate in opposite phases by the differential pressure; and
the above two sensors being provided on each relevant measurement diaphragm and detecting the displacement or strain of each measurement diaphragm generated by the differential pressure applied to each measurement diaphragm.

Detecting the differences in the displacement or strain of each of these two measurement diaphragms cancels the static pressure error and temperature error and, thus, offers a semiconductor differential pressure measuring device which is excellent in temperature and static pressure characteristics.
Further, the computing circuit can be configured simply by composing a required bridge circuit using at least one first sensor and one second sensor, each located on each of the two measurement diaphragms, leading to a reduction in manufacturing costs.

**Description**

BACKGROUND OF THE INVENTION

1. FIELD OF THE INVENTION

First, the present invention relates to a semiconductor differential pressure measuring device which is excellent in static pressure and temperature characteristics.

Second, the present invention relates to a semiconductor differential pressure measuring device which has good static pressure and temperature characteristics and provides a means of low-cost differential pressure detection.

2. DESCRIPTION OF THE PRIOR ART

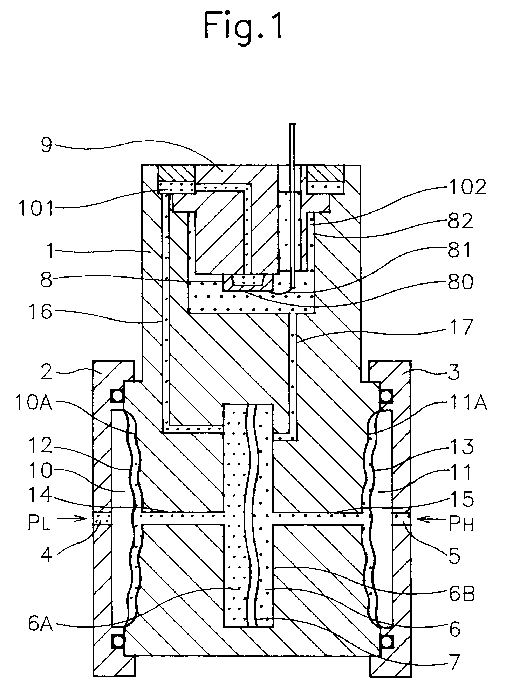

Fig. 1 is an example of a conventional differential pressure measuring device configuration generally used until now, and is in Fig. 1 of published patent application no. S59-56137 (1984).

In Fig. 1, flange 2 and flange 3 are assembled with close fit and fixed by welding to both sides of housing 1. Inlet port 5 of a high-pressure fluid of pressure $P_H$ to be measured and inlet port 4 of a low-pressure fluid of pressure $P_L$ to be measured are provided in both flanges 2 and 3 respectively.

In housing 1, pressure measuring chamber 6 is formed, and in pressure measuring chamber 6, center diaphragm 7 and silicon diaphragm 8 are provided. These diaphragms 7 and 8 are separately fixed to the wall of pressure measuring chamber 6 and, thus, pressure measuring chamber 6 is divided into two by both diaphragms 7 and 8.

On the walls of pressure measuring chamber 6 facing center diaphragm 7, backplates 6A and 6B are formed. The circumference of center diaphragm 7 is welded to housing 1. The entire silicon diaphragm 8 consists of a single crystal silicon substrate.

Four strain gages 80 are formed by selectively diffusing impurities, such as boron, on one side of the silicon substrate, while the other side of the substrate is machined, etched to form the whole side as a concave diaphragm. Four strain gages 80 operate in such a manner as two of the four gages are subject to tension and the other two are subject to compression when the silicon diaphragm deflects due to the differential pressure $\Delta P$. These four strain gages are connected as they form a Wheatstone bridge, and the resistance change is detected as a change in the differential pressure $\Delta P$.

Leads 81 are leads each with one end connected to strain gages 80. Numeral 82 shows the hermetic terminals to which the other end of leads 81 are connected. Support 9 is provided with hermetic terminals and silicon diaphragm 8 is adhered to the end face of pressure measuring chamber 6 of support 9 by a method, such as bonding with low-melting point glass.

Pressure inlet cells 10 and 11 are formed between housing 1 and flange 2 and between housing 1 and flange 3 respectively. In these pressure inlet cells 10 and 11, liquid-blocking diaphragms 12 and 13 are provided respectively, and on the walls of housing 1 facing these liquid-blocking diaphragms 12 and 13, backplates 10A and 11A, having similar shapes to liquid-blocking diaphragms 12 and 13, are formed.

Spaces formed with liquid-blocking diaphragms 12 and 13 and backplates 10A and 11A respectively are connected to pressure measuring chamber 6 through communicating holes 14 and 15. Spaces between liquid-blocking diaphragms 12 and 13 are filled with liquids 101 and 102 such as silicone oil. These fill liquids reach the upper and lower faces of silicon diaphragm 8 through communicating holes 16 and 17. Fill liquids 101 and 102 are separated by center diaphragm 7 and silicon diaphragm 8, but it is devised so that these two volumes of liquid are nearly equal.

In the above configuration, if the pressure is given from the high-pressure side, the pressure which acts on liquid-blocking diaphragm 13 is transmitted to silicon diaphragm 8 by fill liquid 102, while, if a pressure is given from the low-pressure side, the pressure which acts on liquid-blocking diaphragm 12 is transmitted to silicon diaphragm 8 by fill liquid 101.

As a result, silicon diaphragm 8 deflects in accordance with the pressure difference between the high- and low-pressure sides. This deflection is taken out electrically by strain gage 80 and measurement of the differential pressure is effected. However, such a device is affected by static pressure causing a static pressure error.

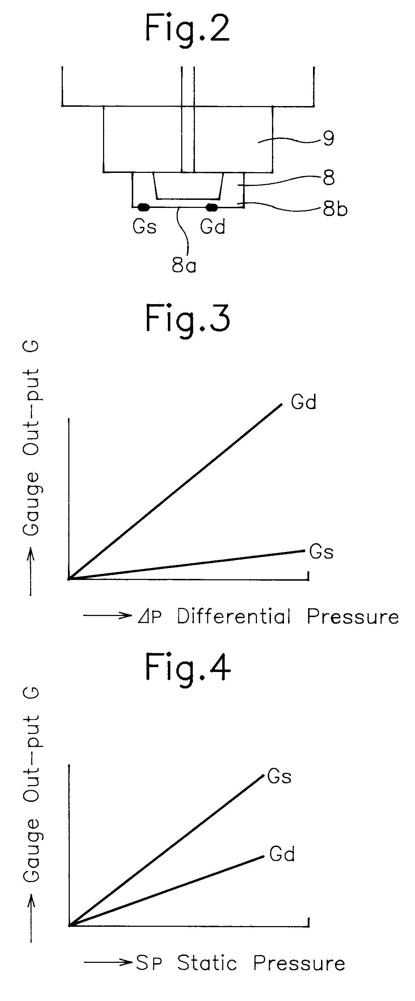

In order to compensate for this static pressure error, diffusion strain gages $G_d$ and $G_s$ are provided on thin wall part 8a and thick wall part 8b of silicon diaphragm 8 as shown in Fig. 2. Strain gage $G_d$ on thin wall part 8a detects deformation of thin wall part 8a due to the differential pressure $\Delta P$. Strain gage $G_s$ on thick wall part 8b detects the value of static pressure $S_p$ by sensing the deformation in silicon diaphragm 8 caused by the difference in the deformation between silicon diaphragm 8 and support 9, when static pressure $S_p$ is applied all over the detector.

In this case, the output change of strain gages $G_d$ and $G_s$ due to differential pressure $\Delta P$ is shown in Fig. 3 and the output change in strain gages $G_d$ and $G_s$ due to static pressure $S_p$ is shown in Fig. 4. That is, if differential pressure $\Delta P$ is applied, the output of not only strain gage $G_d$ but also strain gage $G_s$ varies.

For this reason, applied differential pressure $\Delta P$ is determined using the following equation (1) clarifying the corre-

lation.

$$\Delta P = \sum_{i=0}^{n} \sum_{j=0}^{m} K_{ij} \times G_d{}^i \times G_s{}^j \qquad (1)$$

In this case, as the outputs of strain gages $G_d$ and $G_s$ are closely correlated and, thus, separation of the outputs are not so good, there are problems that make correction computations of higher orders (n, m) necessary, and accuracy after a correction cannot be sufficiently high; thus, the static pressure characteristics are not so good.

## SUMMARY OF THE INVENTION

The purpose of the present invention is to resolve these problems and to provide a semiconductor differential pressure measuring device having good static pressure and temperature characteristics.

According to the invention there is provided a semiconductor differential pressure measuring device as defined in claim 1.

This is a semiconductor differential pressure measuring device comprising two measurement diaphragms and two detection sensors provided in a semiconductor substrate using micromachining techniques, and a computing circuit which computes the differences between these two sensor outputs:

for each of the two measurement diaphragms, the measuring pressure transmission communicating hole being provided respectively so that these two measurement diaphragms operate in opposite phases by the differential pressure; and

the above two sensors being provided on each relevant measurement diaphragm and detecting the displacement or strain of each measurement diaphragm generated by the differential pressure applied to each measurement diaphragm.

Detecting the differences in the displacement or strain of each of these two measurement diaphragms cancels the static pressure error and temperature error and, thus, offers a semiconductor differential pressure measuring device which is excellent in temperature and static pressure characteristics.

Further, the computing circuit can be configured simply by composing a required bridge circuit using at least one first sensor and one second sensor, each located on each of the two measurement diaphragms, leading to a reduction in manufacturing costs.

## BRIEF DESCRIPTION OF THE DRAWINGS

Fig. 1 is a drawing illustrating an example of a conventional differential pressure measuring device configuration generally used until now.

Fig. 2 is a drawing illustrating the details of the essential part of Fig. 1.

Fig. 3 is a diagram describing the operation of the device shown in Fig. 1.

Fig. 4 is another diagram describing the operation of the device shown in Fig. 1.

Fig. 5 is a drawing illustrating the configuration of the essential part of an embodiment of the present invention.

Fig. 6 is a drawing describing the details of the essential part of the tangible configuration for the device shown in Fig. 5.

Fig. 7 is a cross sectional view of A-A in Fig. 6.

Fig. 8 is a cross sectional view of B-B in Fig. 6.

Fig. 9 is a cross sectional view of C-C in Fig. 6.

Fig. 10 is a drawing illustrating the details of the essential part of the device shown in Fig. 5.

Fig. 11 shows a drawing illustrating the essential part of the computation circuit of the device shown in Fig. 5.

Fig. 12 is a diagram describing the operation of the device shown in Fig. 5

Fig. 13 is another diagram describing the operation of the device shown in Fig. 5.

Fig. 14 is a drawing illustrating the configuration of the essential part of another embodiment of the present invention.

Fig. 15 is a drawing illustrating the configuration of the essential part of a third embodiment of the present invention.

Fig. 16 is a drawing illustrating the configuration of the essential part of a fourth embodiment of the present invention.

Fig. 17 is a drawing describing the details of the essential part in the embodiment illustrated in Fig. 16.

Fig. 18 is a drawing describing the essential part of the computation circuit for the part indicated in Fig. 17.

Fig. 19 is a drawing describing the operation of the embodiment shown in Fig. 16.

Fig. 20 is another drawing describing the operation of the embodiment shown in Fig. 16.

Fig. 21 is yet another drawing describing the operation of the embodiment shown in Fig. 16.

Fig. 22 is a drawing illustrating the configuration of the essential part of a fifth embodiment of the present invention.

Fig. 23 is a drawing describing the essential part of the computation circuit for the embodiment shown in Fig. 22.

Fig. 24 is a drawing illustrating the configuration of the essential part of a sixth embodiment of the present invention.

Fig. 25 is a drawing describing the essential part of the computation circuit for the embodiment shown in Fig. 24.

Fig. 26 is a drawing illustrating the configuration of the essential part of a seventh embodiment of the present invention.

Fig. 27 is a drawing describing the essential part of the computation circuit for the embodiment shown in Fig. 26.

DESCRIPTION OF THE PREFERRED EMBODIMENT

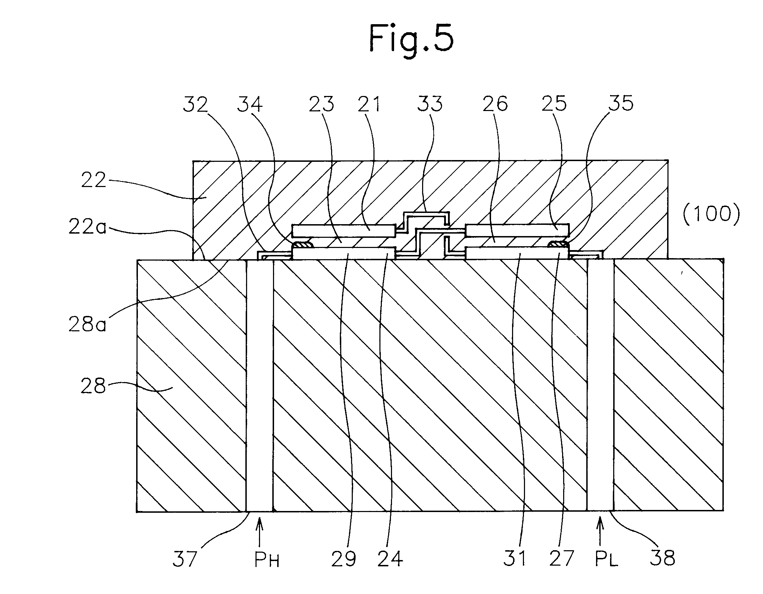

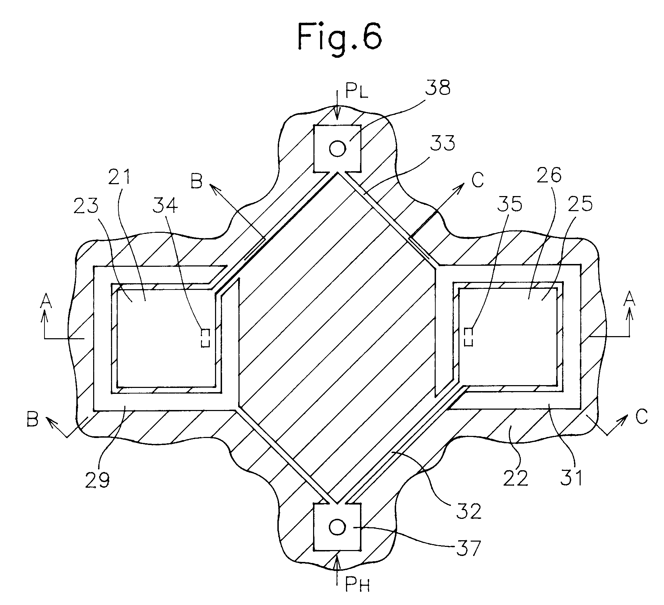

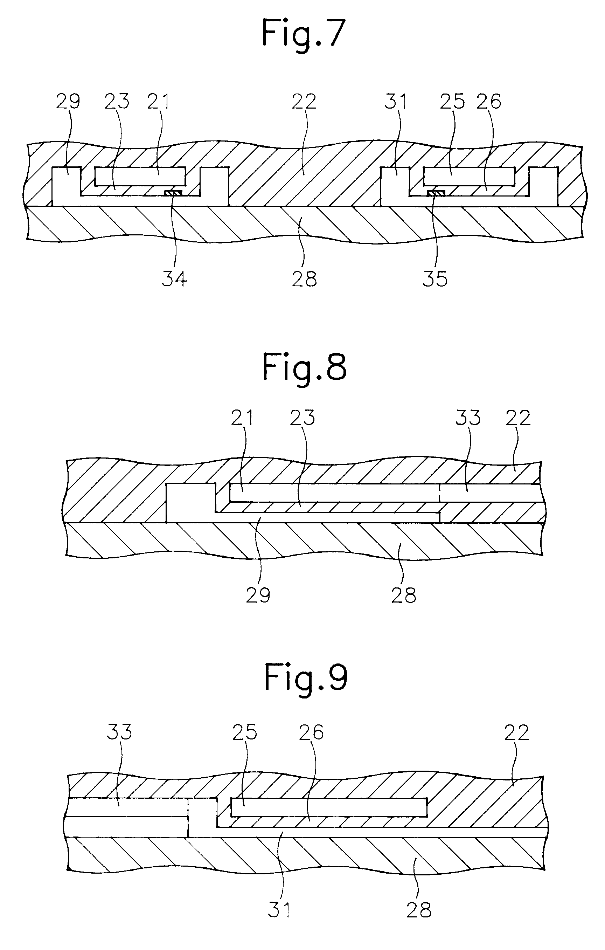

Fig. 5 illustrates the configuration of the essential part of an embodiment of the present invention. Fig. 6 describes details of the essential part of tangible configuration for the device shown in Fig. 5. Fig. 7 is a cross sectional view of A-A in Fig. 6. Fig. 8 is a cross sectional view of B-B in Fig. 6. Fig. 9 is a cross sectional view of C-C in Fig. 6.

In these drawings, the configuration of the same symbols as in Fig. 1 represents the same functions. In the following, only the differences from Fig. 1 are described.

First measuring cell 21 consists of an extremely small gap, which is provided in silicon substrate 22 and forms first measuring diaphragm 23 on one side 22a of the silicon substrate. First concave 24 is provided on the surface of one side 22a of silicon substrate 22 on the opposite side of first measuring diaphragm 23, and is very shallow.

Second measuring cell 25 consists of an extremely small specified gap, which is provided in silicon substrate 22 and forms second measuring diaphragm 26 having the same effective area as first measuring diaphragm 23. Second concave 27 is provided on the surface of one side 22a of silicon substrate 22 on the opposite side of second measuring diaphragm 26, and is very shallow.

Support substrate 28 is provided with its one side 28a in contact with one side 22a of silicon substrate 22 and forms first concave 24 and third measuring cell 29, and also forms second concave 27 and fourth measuring cell 31.

In addition, first, second, third, and fourth measuring cells 21, 25, 29, and 31 are fabricated with extremely small gaps in the direction of the excess pressure backup so that they can prevent measuring diaphragm from rupturing from the backup when excessive pressure is applied. For example, the gap is approximately 1 $\mu$m. In Fig. 5, the gaps in the direction of the backup are overly large on purpose for better understanding of the present invention.

Numeral 32 shows the first communicating hole provided in silicon substrate 22, and the measuring pressure on one side $P_H$ is introduced from one end of this hole and the other end is communicated with third measuring cell 29 and second measuring cell 25. Numeral 33 shows the second communicating hole provided in silicon substrate 22, and the measuring pressure on the other side $P_L$ is introduced from one end of this hole and the other end is communicated with fourth measuring cell 31 and first measuring cell 21.

In Fig. 5, the connection of these communicating holes is represented in a different manner from practical one to help understand the relationship in the connection of first communicating hole 32 with third measuring cell 29 and second measuring cell 25 or for the connection of second communicating hole 33 with fourth measuring cell 31 and first measuring cell 21. In practice, the relationship between connections is as shown in Fig. 6 to Fig. 9.

Numeral 34 shows the first sensor to detect strain generated in first measuring diaphragm 23 and in this case, a shearing strain detection element is used. Numeral 35 shows the second sensor to detect strain generated in second measuring diaphragm 26 and in this case, a shearing strain detection element is used.

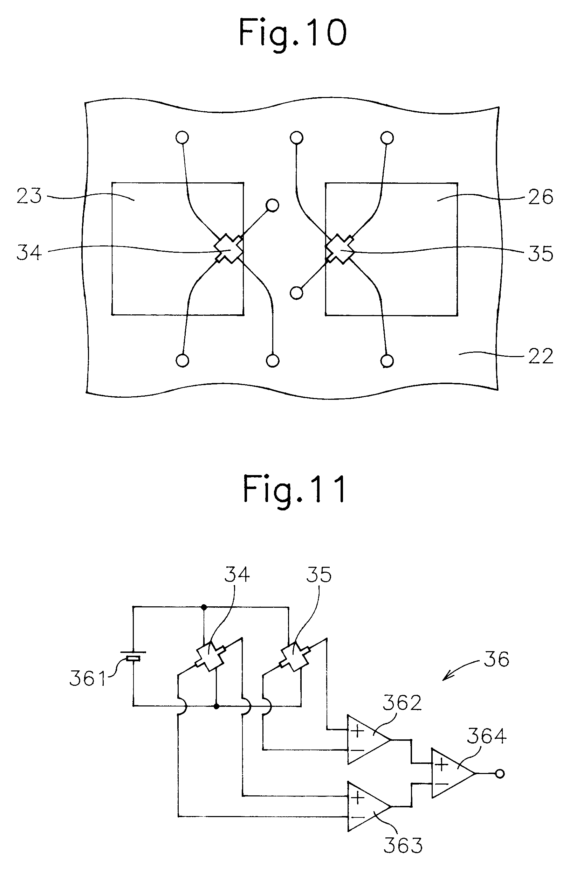

First sensor 34 and second sensor 35, for which each shearing strain detection element is used, are located on first measuring diaphragm 23 and second measuring diaphragm 26 respectively, as shown in Fig. 10.

Numeral 36 shows a computation circuit to compute the difference between the output of first sensor 34 and the output of second sensor 35 as shown in Fig. 11. In Fig. 11, numeral 361 shows a power supply to supply voltage to first sensor 34 and second sensor 35, numerals 362 and 363 show amplifiers to amplify the outputs of first sensor 34 and second sensor 35 respectively, and numeral 364 shows a differential amplifier to amplify the difference in the outputs of amplifiers 362 and 363.

Numeral 37 shows a pressure inlet hole to introduce measuring pressure $P_H$ into first communicating hole 32. Numeral 38 shows a pressure inlet hole to introduce measuring pressure $P_L$ into second communicating hole 33.

In the above configuration, the high-pressure side measuring pressure $P_H$ is applied to third measuring cell 29 and second measuring cell 25 through first communicating hole 32. The low pressure side measuring pressure $P_L$ is applied to fourth measuring cell 31 and first measuring cell 21 through second communicating hole 33.

Depending on the pressure difference between the high-pressure side pressure $P_H$ and the low-pressure side pressure $P_L$, first measuring diaphragm 23 and second measuring diaphragm 26 are deflected and are strained. These strains are electrically detected by strain detection element 34 and strain detection element 35.

The differential pressure is measured by computing the output of first strain detection element 34 and the output of second strain detection element 35 using computation circuit 36.

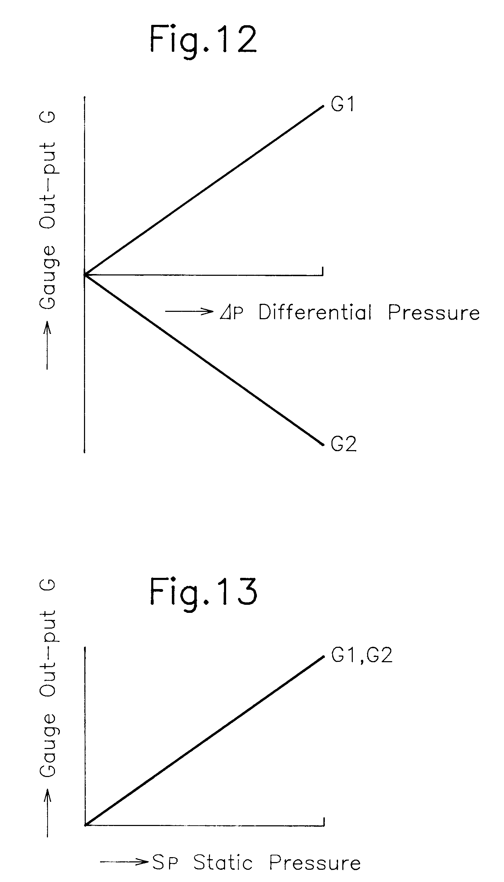

In other words, first measuring diaphragm 23 and second measuring diaphragm 26 become deformed in almost opposite directions because their effective areas are almost the same. Gage output $G_1$ of strain detection element 34 and gage output $G_2$ of strain detection element 35 output completely opposite phase outputs for the differential pressure $\Delta P = P_H - P_L$, as shown in Fig. 12, while if static pressure $S_P = P_H = P_L$ is applied, the deformation of first measuring diaphragm 23 is equal to that of second measuring diaphragm 26 and their outputs are almost the same, as shown in Fig. 13.

If subtraction for gage output G1 of strain detection element 34 and gage output G2 of strain detection element 35 is implemented as in the following equation (2), an output proportional to differential pressure $\Delta P$ is obtained as an output U whose amount of change is twice that of the individual outputs.

If addition for gage output G1 of strain detection element 34 and gage output G2 of strain detection element 35 is implemented as in the following equation (3), output V that varies with static pressure SP only is obtained without being affected by differential pressure $\Delta P$.

This output V can be used as a static pressure signal. This static pressure signal V can be used for highly precise computation, such as correction of sensitivity changes due to static pressure.

$$\Delta P = U = G_1 - G_2 \tag{2}$$

$$S_P = V = G_1 + G_2 \tag{3}$$

As described above, measuring diaphragms 23 and 26 of the same effective area can be accurately formed on a silicon substrate 22 utilizing semiconductor micromachining technology, and measuring diaphragm 23 and measuring diaphragm 26 are configured so as to act in opposite directions to each other using communicating holes 32 and 33.

As a result:

(1) The subtraction signal for the output of first strain detection element 34 and the output of second strain detection element 35 can be obtained as a signal highly sensitive to differential pressure $\Delta P$ only.
(2) In addition, its rate-of-change in the output (sensitivity) is twice that of the individual element outputs.
(3) An addition signal for the output of first strain detection element 34 and the output of second strain detection element 35 can be obtained as a signal highly sensitive to static pressure $S_P$ only.
(4) Accordingly, subtraction or addition alone provides a highly precise differential pressure signal $\Delta P$ or static pressure signal $S_P$
(5) Because of small mutual influences between differential pressure signal $\Delta P$ and static pressure signal SP in the computation shown in equation (4) for higher precision, it is sufficient to take only small computation orders (n, m).
(6) Characteristics other than static pressure $S_P$ e.g., temperature characteristics, are also canceled by subtraction between the outputs of first strain detection element 34 and second strain detection element 35 to offer excellent temperature characteristics.

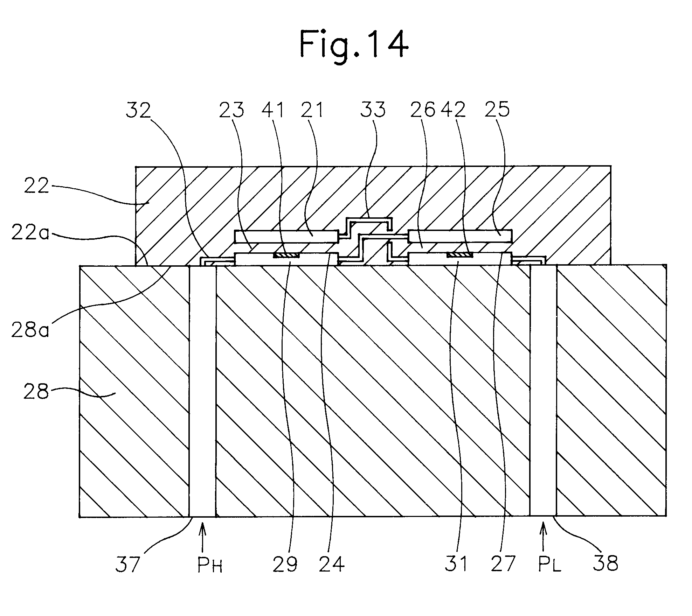

Fig. 14 illustrates the configuration of the essential part of another embodiment of the present invention.

In this embodiment, vibrating beams 41 and 42 whose natural frequencies vary with the changes in strain are used as first sensor 34 and second sensor 35. This embodiment has an advantage of being capable of using frequency signals as measuring signals.

The signal of differential pressure $\Delta P$ is calculated as shown below.

Let the changed amount in the signals for the high and low pressures generated by differential pressure $\Delta P$ be $f_H$ and $f_L$ respectively, and also let the changed amount in the signals for the high and low pressures generated by static pressure Sp be $f_{HS}$ and $f_{LS}$ respectively.

As previously described, as first measuring diaphragm 23 and second measuring diaphragm 26 operate in opposite phases, the differential pressure $\Delta P$ output signal can be obtained by computing the difference in the signals from vibrating beams 41 and 42 as shown below:

$$\text{Differential pressure } \Delta P = P_H - P_L = K(f_{HO} - f_{LO}) \tag{4}$$

where

$f_{HO}$ = changed amount of total high-pressure side output signal
$f_{LO}$ = changed amount of total low-pressure side output signal, and
K = a constant.

Since

$$f_{HO} = f_H + f_{HS} \tag{5}$$

$$f_{LO} = -f_L + f_{LS} \tag{6}$$

and it is regarded to be $f_{HS} = f_{LS}$,

$$\text{Differential pressure } \Delta P = K[f_H - (-f_L)] \tag{7}$$

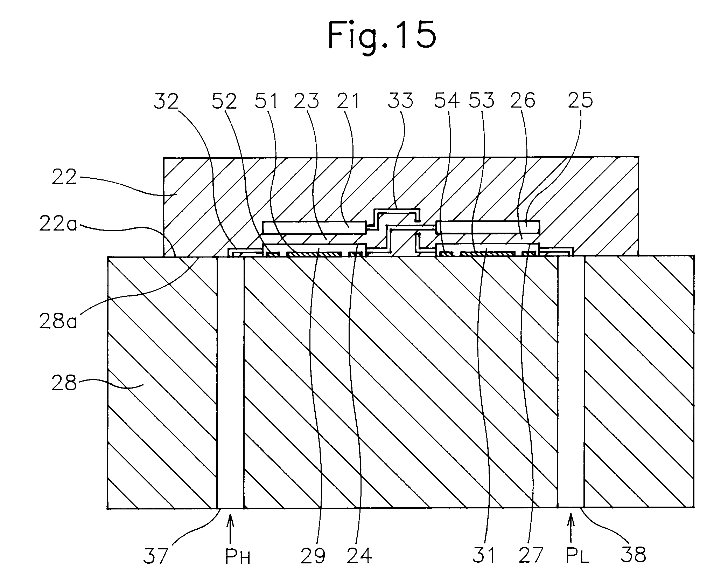

Fig. 15 is a drawing illustrating the configuration of the essential part of a third embodiment of the present invention.

In this embodiment, two sets of electrodes 51, 52 and 53, 54 concentrically arranged on surface 28a of support substrate 28 facing first measuring diaphragm 23 and second measuring diaphragm 26, are used as first sensor 34 and second sensor 35 respectively. This arrangement has the advantage of using capacitance signals as the measurement signals.

Differential pressure signal $\Delta P$ is calculated as shown below. Let the capacitance signals between electrodes of 51, 52 and first measuring diaphragm 23 and between electrodes of 53, 54 and second measuring diaphragm 26 by differential pressure $\Delta P$ be $C_{H1}$, $C_{H2}$, $C_{L1}$, and $C_{L2}$ respectively and let signals generated by static pressure Sp be $C_{HS1}$, $C_{HS2}$, $C_{LS1}$, and $C_{LS2}$ respectively. Since measuring diaphragms 23 and 26 operate in opposite phases as described previously, the output signal for $\Delta P$ can be obtained by making the calculation as shown below.

The displacement of measuring diaphragms 23 and 26, $\delta_{HO}$ and $\delta_{LO}$ are represented as

$$\delta_{HO} = K(C_{H2} - C_{H1}) \tag{8}$$

$$\delta_{LO} = K(C_{L2} - C_{L1}) \tag{9}$$

Displacements $\delta HO$ and $\delta LO$ are further divided into differential and static pressure components respectively.

$$\delta_{HO} = \delta_H + \delta_{HS} \tag{10}$$

$$\delta_{LO} = -\delta_L + \delta_{LS} \tag{11}$$

Therefore, the difference between equations (8) and (9) constitutes the differential pressure signal and the sum of equations (8) and (9) constitutes the static pressure signal.

$$\begin{aligned}
\text{Differential pressure } \Delta P \\
= \delta_{HO} - \delta_{LO} \\
= K\{(C_{H2} - C_{H1}) - (C_{L2} - C_{L1})\}
\end{aligned} \tag{12}$$

As a result, in the invention in accordance with claim 1,

(1) a signal obtained by computing the difference between the output of the first strain detection element and the output of the second strain detection element can be used as a signal highly sensitive to differential pressure only;
(2) in addition, the rate-of-change in its output (sensitivity) doubles;
(3) the signal obtained by computing the sum of the output of the first strain detection element and the output of the second strain detection element can be used as a signal highly sensitive to static pressure only;
(4) accordingly, computation of the difference or the sum alone provides a highly precise differential pressure signal or static pressure signal;
(5) because of small cross-influence between the differential pressure signal and the static pressure signal, a smaller order of computation is required in computations for higher precision, if necessary; and
(6) other than static pressure, for example, the temperature characteristics are canceled by computation of the difference between the output of the first strain detection element and the output of the second strain detection element, leading to excellent temperature characteristics.

In addition, the invention in accordance with claim 2 has the advantage that analog signals can be used as measurement signals. The invention in accordance with claim 3 has the advantage that frequency signals can be used as measurement signals. The invention in accordance with claim 4 has the advantage that capacitance signals can be used as measurement signals.

Summarizing the above, the inventions in accordance with claims 1, 2, 3, and 4 can realize semiconductor differential pressure measuring devices which are excellent in static pressure and temperature characteristics.

On the other hand, in computation circuit 36 shown in Fig. 11, at least amplifiers 362 and 363 and differential amplifier 364 are required and this makes the computation circuit complex and raises the manufacturing costs.

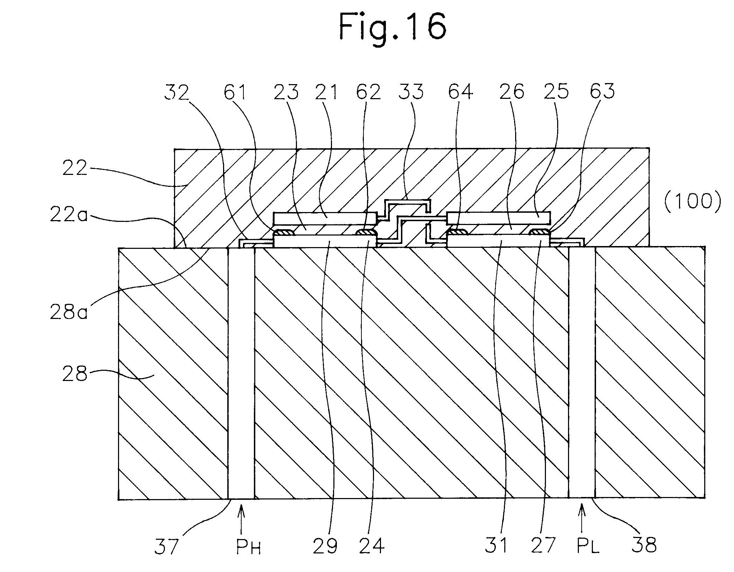

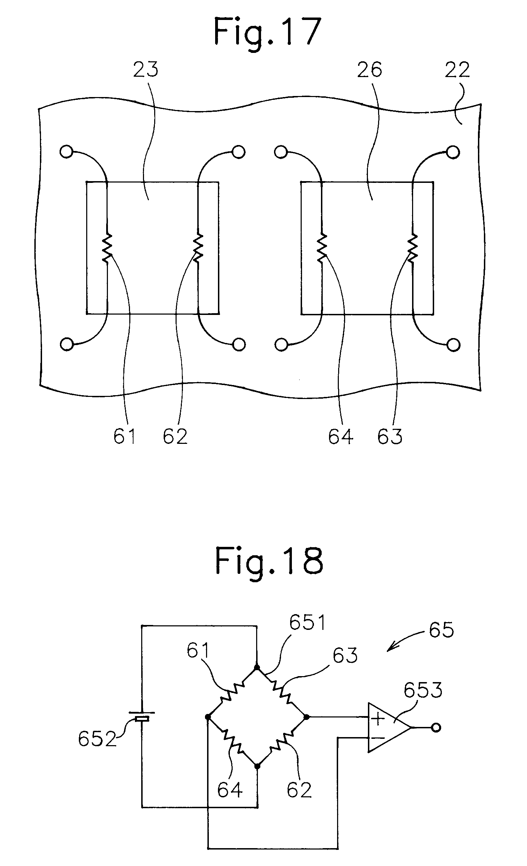

Fig. 16 is a drawing illustrating the configuration of the essential part of a fourth embodiment of the present invention. Fig. 17 is a plan view of the measuring diaphragms in the embodiment illustrated in Fig. 16 and describes the details of the essential part in Fig. 16. Fig. 18 is a drawing describing the essential part of the computation circuit for the part indicated in Fig. 17. In these drawings, the components with the same symbols as in Fig. 5 represent the same functions. In the following description, only the parts different from those in Fig. 5 are explained.

In Fig. 16, numerals 61 and 62 indicate first sensor 1 and first sensor 2 which detect the strain generated in first measuring diaphragm 23 and are arranged along the sides in a direction vertical to diaphragm 23 as shown in Fig. 17. In this case, strain gages are used for the sensors.

Numerals 63 and 64 indicate second sensor 1 and second sensor 2 which detect the strain generated in second measuring diaphragm 26 and are arranged along the sides in direction vertical to diaphragm 26 as shown in Fig. 17. In this case, strain gages are used for the sensors.

Numeral 65 is a computation circuit configured so that an electrical output signal corresponding to the differential pressure being measured is obtained by computing the difference between the output resulting from first sensors 61 and 62 and the output resulting from second sensors 63 and 64 as shown in Fig. 18.

Numeral 651 is a bridge circuit provided in computation circuit 65. This bridge 651 has such a configuration that first sensors 61 and 62 are connected in the arms opposite from each other and second sensors 63 and 64 are connected in other arms opposite from each other as shown in Fig. 18. This means that first sensor 1, 61, second sensor 1, 63, first sensor 2, 62, and second sensor 2, 64 are arranged in turn in a clockwise direction in Fig. 18 in each arm of bridge 651.

Numeral 652 indicates a power supply which gives the voltage between one power supply terminal connecting sensors 61 and 63, and the other power supply terminal connecting sensors 62 and 64.

Numeral 653 indicates an amplifier which amplifies the output between one output terminal connecting sensor 61 and sensor 64, and the other output terminal connecting sensor 63 and sensor 62.

First sensors 61 and 62 and second sensors 63 and 64 detect the same strain for a differential pressure being measured, but for a temperature change or static pressure, first sensor 1, 61, and second sensor 1, 63, detect the same strain and first sensor 2, 62, and second sensor 2, 64, detect another strain that is the same, based on symmetry in arranged positions.

Therefore, in such a connection as shown in Fig. 18, even if the temperature changes or static pressure is applied, the output of bridge 651 does not change if the outputs of first sensor 1, 61, and second sensor 1, 63 vary. Similarly, the output of bridge 651 does not change if the outputs of first sensor 2, 62 and second sensor 2, 64 vary.

In this configuration, a high-pressure side measuring pressure $P_H$ is applied to third measuring cell 29 and second measuring cell 25 via first communicating hole 32. A low-pressure side measuring pressure $P_L$ is applied to fourth measuring cell 31 and first measuring cell 21 via second communicating hole 33.

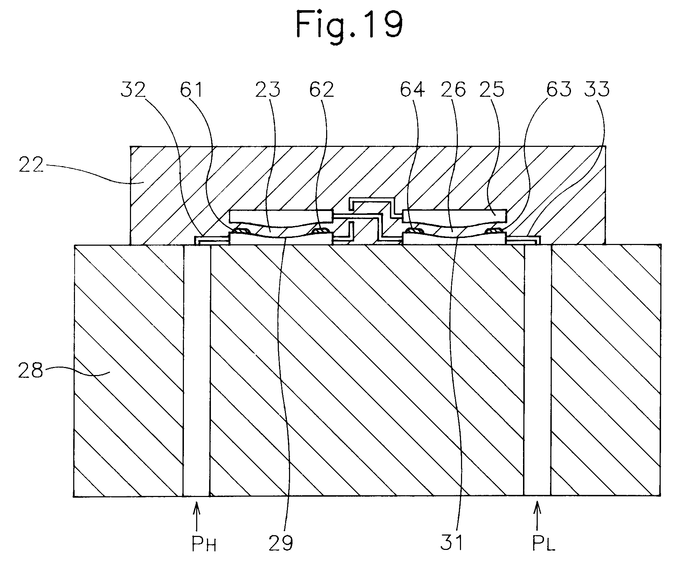

As shown in Fig. 19, corresponding to the pressure difference between the high-pressure side measuring pressure $P_H$ and the low-pressure side measuring pressure $P_L$, first measuring diaphragm 23 and second measuring diaphragm 26 are deflected and generate strain. These quantities of strain are electrically detected by first sensors 61 and 62, and second sensors 63 and 64.

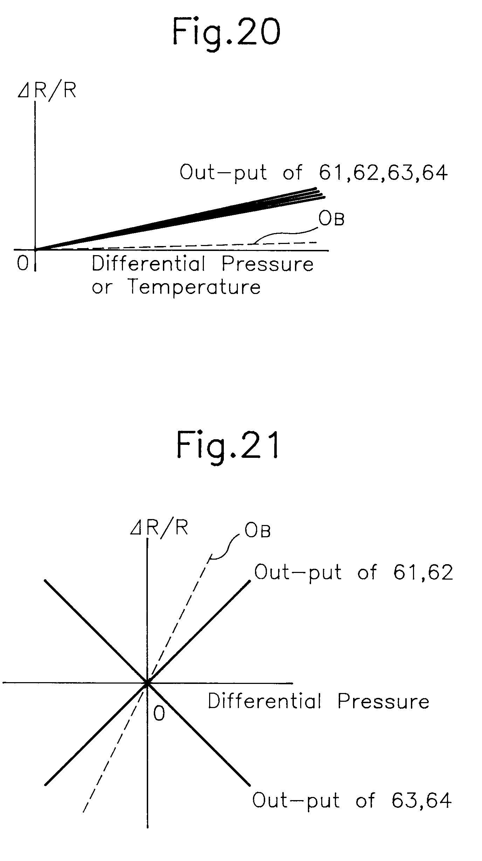

Computation circuit 65 computes the difference between the output of first sensors 61 and 62 and the output of second sensors 63 and 64 using bridge circuit 651 and outputs an output signal corresponding to the differential pressure being measured, and at the same time, reduces the error due to static pressure and temperature. That is, the rates of resistance change $\Delta R/R$ in first sensors 61 and 62 and second sensors 63 and 64 are nearly equal for static pressure and temperature as shown in Fig. 20. Thus, the rate of resistance change $\Delta R/R$ of bridge output $O_B$ becomes small, while the rates of resistance change $\Delta R/R$ for the differential pressure in first sensors 61 and 62 are equal to that in second sensors 63 and 64 but in opposite phases. Therefore, the rate of resistance change $\Delta R/R$ of bridge output OB becomes large as shown in Fig. 21. Accordingly, mere measurement of the output of bridge 651 can reduce an error due to static pressure and temperature.

As a result, computation circuit 65 can be simplified and its manufacturing cost can be reduced by composing bridge 651 using first sensors 61 and 62 and second sensors 63 and 64 provided on two measuring diaphragms 23 and 26 respectively connected in opposite phase by the differential pressure being measured. Actually, three amplifiers are necessary in computation circuit 36 but only one amplifier is necessary in computation circuit 65.

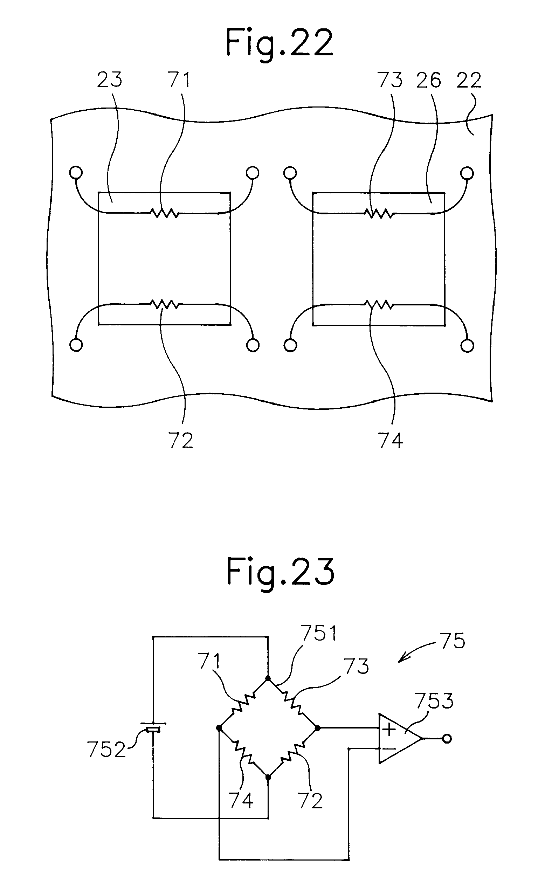

Fig. 22 is a drawing illustrating the configuration of the essential part of a fifth embodiment of the present invention. In this embodiment, numerals 71 and 72 indicate first sensor 1 and first sensor 2 which detect strain generated in first measuring diaphragm 23 and are arranged along the sides in direction horizontal to diaphragm 23 as shown in Fig. 22.

Numerals 73 and 74 indicate second sensor 1 and second sensor 2 which detect the strain generated in second measuring diaphragm 26 and are arranged along the sides in direction horizontal to diaphragm 26 as shown in Fig. 22.

Numeral 75 is a computation circuit configured so that an electrical output signal corresponding to the differential pressure being measured is obtained by computing the difference between the output resulting from first sensors 71 and 72 and the output resulting from second sensors 73 and 74 as shown in Fig. 23.

Numeral 751 indicates a bridge circuit provided in computation circuit 75. This bridge 751 has such a configuration that first sensors 71 and 72 are connected in the arms opposite to each other and second sensors 73 and 74 are connected in the other arms opposite to each other as shown in Fig. 23. This means that first sensor 1, 71, second sensor 1, 73, first sensor 2, 72, and second sensor 2, 74 are arranged in turn in a clockwise direction in Fig. 23 in each arm of bridge 751.

Numeral 752 indicates a power supply which gives the voltage between one power supply terminal connecting sensors 71 and 73, and the other power supply terminal connecting sensors 72 and 74, in bridge 751.

Numeral 753 indicates an amplifier which amplifies the output between one output terminal connecting sensor 71 and sensor 74, and the other output terminal connecting sensor 73 and sensor 72, in bridge 751. In the above configuration, its operation and effect are the same as that of the embodiment illustrated in Fig. 16.

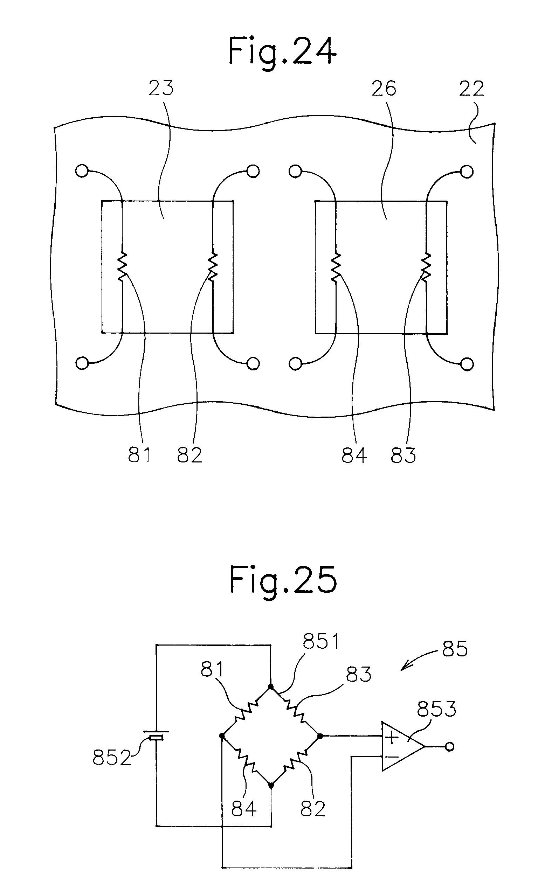

Fig. 24 is a drawing illustrating the configuration of the essential part of a sixth embodiment of the present invention. In this embodiment, numerals 81 and 82 indicate first sensor 1 and first sensor 2 which detect the strain generated in first measuring diaphragm 23 and are arranged near the center of diaphragm 23 and in parallel with a side of diaphragm 23 as shown in Fig. 24.

Numerals 83 and 84 indicate second sensor 1 and second sensor 2 which detect the strain generated in second measuring diaphragm 26 and are arranged near the center of diaphragm 26 and in parallel with a side of diaphragm 26 as shown in Fig. 24. In this case, a (110) wafer is adopted as silicon substrate 22. This is because if the (110) wafer is used, strain gages are sensitive even near the center of first measuring diaphragm 23 and the center of second measuring diaphragm 26.

Numeral 85 is a computation circuit configured so that an electrical output signal corresponding to the differential pressure being measured is obtained by computing the difference between the output resulting from first sensors 81 and 82 and the output resulting from second sensors 83 and 84 as shown in Fig. 25.

Numeral 851 is a bridge circuit provided in computation circuit 85. This bridge 851 has such a configuration that first sensors 81 and 82 are connected in the arms opposite to each other and second sensors 83 and 84 are connected in the other arms opposite to each other as shown in Fig. 25. This means that first sensor 1, 81, second sensor 1, 83, first sensor 2, 82, and second sensor 2, 84 are arranged in turn in a clockwise direction in Fig. 25 in each arm of bridge 851.

Numeral 852 indicates a power supply which gives the voltage between one power supply terminal connecting sensors 81 and 83, and the other power supply terminal connecting sensors 82 and 84, in bridge 851.

Numeral 853 indicates an amplifier which amplifies the output between one output terminal connecting sensor 81 and sensor 84, and the other output terminal connecting sensor 83 and sensor 82, in bridge 851. In the above configuration, its operation and effect are the same as that of the embodiment illustrated in Fig. 16.

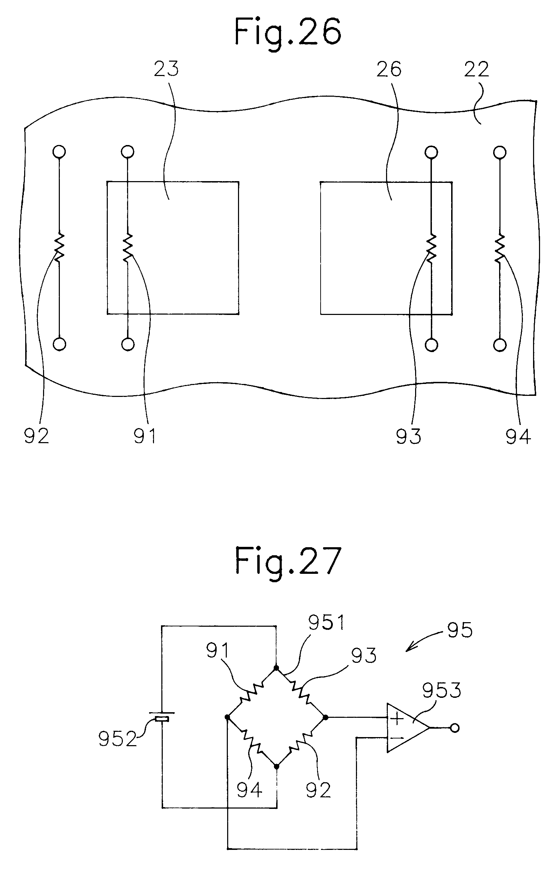

Fig. 26 is a drawing illustrating the configuration of the essential part of a seventh embodiment of the present invention. In this embodiment, numeral 91 indicates the first sensor detecting strain generated in first measuring diaphragm 23 by the differential pressure being measured and first sensor 91 is arranged along the vertical side of first measuring diaphragm 23 as shown in Fig. 26.

Numeral 93 indicates the second sensor detecting strain generated in second measuring diaphragm 26 by the differential pressure being measured and second sensor 93 is arranged along the vertical side of second measuring diaphragm 26 as shown in Fig. 26.

Numerals 92 and 94 indicate the third and fourth sensors provided on silicon substrate 22, symmetrically positioned about first and second measuring diaphragms 23 and 26, as shown in Fig. 26.

Numeral 95 is a computation circuit configured so that an electrical output signal corresponding to the differential pressure being measured is obtained by computing the difference between the output resulting from first sensor 91 and the output resulting from second sensors 93 as shown in Fig. 27. Third and fourth sensors 92 and 94 are provided so that static pressure and temperature compensation can be effectively obtained.

Numeral 951 indicates a bridge circuit provided in computation circuit 95. This bridge 951 has such a configuration that first sensor 91 and third sensor 92 are connected in the arms opposite to each other and second sensor 93 and fourth sensor 94 are connected in the other arms opposite to each other as shown in Fig. 27. This means that first sensor 91, second sensor 93, third sensor 92, and fourth sensor 94 are arranged in turn in a clockwise direction in Fig. 27 in each arm of bridge 951.

Numeral 952 indicates a power supply which gives the voltage between one power supply terminal connecting first sensor 91 and second sensor 93, and the other power supply terminal connecting third sensor 92 and fourth sensor 94, in bridge 951.

Numeral 953 indicates an amplifier which amplifies the output between one output terminal connecting first sensor 91 and fourth sensor 94, and the other output terminal connecting second sensor 93 and third sensor 92, in bridge 951. In the above configuration, its operation and effect are the same as that of the embodiment illustrated in Fig. 16.

In addition, in the above embodiments, it is explained that bridge 651, 751 or 851 is composed of first sensors 61 and 62, 71 and 72, or 81 and 82 and second sensors 63 and 64, 73 and 74, or 83 and 84 respectively. However, this is not limited to such configuration as shown in Fig. 26. In short, it is sufficient to compose a bridge as a means of differential pressure detection so that at least one first sensor and one second sensor are arranged in adjacent arms and an electrical output signal corresponding to a differential pressure being measured can be obtained. That is, the other two arms of the bridge can be composed of ordinary resistor elements.

Further, in the above embodiments, it is explained that silicon substrate 22 is used. However, it is not limited to this and so, for example, a gallium arsenide substrate or silicon carbide substrate can be used. In conclusion, the device may be formed on any semiconductor material.

Although it is explained in the above embodiments that second measuring diaphragm 26 has the same effective area as first measuring diaphragm 23, it is preferable but not limited to this. For example, if the thickness of first measuring diaphragm 23 is different from that of second measuring diaphragm 26, it is not necessary to have the same effective areas. If the effective areas of both measuring diaphragms are different, it does not matter if they are corrected using a correction coefficient. In short, it is sufficient that there are two measuring diaphragms 23 and 26.

As described above, by the inventions according to claims 5 to 7, the computation circuit can be constructed in a simpler manner and manufacturing costs can be reduced through configuring a bridge using a first sensor and a second sensor provided on each of two measuring diaphragms which are formed to operate in opposite phases by a differential pressure being measured. Accordingly, the inventions in accordance with claims 5, 6, and 7 can realize semiconductor differential pressure measuring devices which are excellent in static pressure and temperature characteristics and provide a low-cost means of differential pressure detection.

## Claims

1. A semiconductor differential pressure measuring device in which measuring cells are provided on opposite sides of the measuring diaphragm, comprising the following:

    (1) a first measuring cell which is provided near one surface of a semiconductor substrate and a first measuring diaphragm formed on the same substrate surface side of the said first measuring cell;
    (2) a first concave provided on the surface of the said substrate on the opposite face of the said first measuring diaphragm to the said first measuring cell;
    (3) a second measuring cell which is provided near the surface of the said semiconductor substrate and a second measuring diaphragm formed on the same substrate surface side of the said second measuring cell;
    (4) a second concave provided on the surface of the said substrate on the opposite face of the said second measuring diaphragm to the said second measuring cell;
    (5) a support substrate whose surface is in contact with the said surface of the said semiconductor substrate, which forms a third measuring cell using the said first concave and a fourth measuring cell using the said second concave;
    (6) a first communicating hole provided in the said semiconductor substrate, at one end of which one measurement pressure is introduced and the other end of which communicates with the said third and second measuring cells;
    (7) a second communicating hole provided in the said semiconductor substrate, at one end of which the other measurement pressure is introduced and the other end of which communicates with the said fourth and first measuring cells;
    (8) a first sensor that detects the displacement or strain generated in the first measuring diaphragm by the differential pressure to be measured;
    (9) a second sensor that detects the displacement or strain generated in the second measuring diaphragm by the said differential pressure to be measured; and
    (10) a computation circuit that computes the difference between the output of the said first sensor and the output of the said second sensor as output corresponding to the said differential pressure to be measured.

2. A semiconductor differential pressure measuring device in accordance with claim 1, wherein strain gages are used as the said first and second sensors.

3. A semiconductor differential pressure measuring device in accordance with claim 1, wherein vibration strain-sensors are used as the said first and second sensors.

4. A semiconductor differential pressure measuring device in accordance with claim 1, wherein capacitance sensors are used as the said first and second sensors.

5. A semiconductor differential pressure measuring device in accordance with claim 1, 2, 3 or 4, wherein a computation circuit that comprises a bridge configured to include at least one said first sensor and one said second sensor is used as the said computation circuit and arranged to obtain an output electrical signal corresponding to the said differential pressure to be measured by placing the said first and second sensors in the adjacent arms of the said bridge.

6. A semiconductor differential pressure measuring device in accordance with claim 5, comprising:

the third and fourth sensors provided symmetrically with each other about the said first and second measuring diaphragms on the said semiconductor substrate; and
a means of differential pressure detection arranged to obtain an output electrical signal corresponding to the said differential pressure to be measured by placing the said first and second sensors in two arms of the said bridge respectively, the connecting terminal of the said two arms being connected to one power supply terminal of the said bridge, and placing the said third and fourth sensors in the other two arms of the said bridge respectively, the connecting terminal of the said other two arms being connected to the other power supply terminal of the said bridge.

7. A semiconductor differential pressure measuring device in accordance with claim 5, comprising a means of differential pressure detection arranged to obtain an output electrical signal corresponding to the said differential pressure to be measured by placing the said first and second sensors in the two arms of the said bridge respectively, the connecting terminal of the said two arms being connected to one power supply terminal of the said bridge, and placing two resistor elements in the other two arms of the said bridge respectively, the connecting terminal of the said other two arms being connected to the other power supply terminal of the said bridge.

# Fig.1

# Fig.2

# Fig.3

# Fig.4

# Fig.5

EP 0 753 728 A2

# Fig.6

EP 0 753 728 A2

# Fig.7

29  23  21          22          31    25  26

34          28          35

# Fig.8

21    23              33    22

29          28

# Fig.9

33      25    26              22

31          28

# Fig.10

# Fig.11

# Fig.12

↑ Gauge Out-put G

G1

→ ⊿P Differential Pressure

G2

# Fig.13

↑ Gauge Out-put G

G1,G2

——→SP Static Pressure

Fig.14

Fig.15

# Fig.16

EP 0 753 728 A2

# Fig.17

# Fig.18

# Fig.19

EP 0 753 728 A2

# Fig.20

$\Delta R/R$

Out-put of 61,62,63,64

OB

0 | Differential Pressure
or Temperature

# Fig.21

$\Delta R/R$      OB

Out-put of 61,62

Differential Pressure

0

Out-put of 63,64

# Fig.22

# Fig.23

# Fig.24

# Fig.25

# Fig.26

# Fig.27